# EUROPEAN PATENT SPECIFICATION

(11) **EP 3 986 657 B1**
(45) Date of publication and mention of the grant of the patent: **06.11.2024**
(21) Application number: 20736924.0
(22) Date of filing: 22.06.2020
(51) Int. Cl.: B23K 26/00, B23K 26/352, F04C 18/08, F04C 18/16, B23K 101/20

(54) **METHOD FOR MANUFACTURING MACHINE PARTS, SUCH AS COMPRESSOR, EXPANDER OR VACUUM PUMP PARTS**
VERFAHREN ZUR HERSTELLUNG VON MASCHINENTEILEN, WIE VERDICHTER, EXPANDER ODER VAKUUMPUMPENTEILE
PROCÉDÉ DE FABRICATION DE PIÈCES DE MACHINE, DE TYPE PIÈCES DE COMPRESSEUR, DE DÉTENDEUR OU DE POMPE À VIDE

(30) Priority: 24.06.2019 US 201962865357 P
(43) Date of publication of application: 27.04.2022
(60) Divisional application: 24200705.2
(73) Proprietor: ATLAS COPCO AIRPOWER, naamloze vennootschap, 2610 Wilrijk (BE)
(72) Inventor: DE TIMMERMAN, Chiara, 2610 Wilrijk (BE); VENNENS, Karel, 2610 Wilrijk (BE); SCHULZ-GAUS, Olav G., 52353 Düren (DE); PANUSCH, Marco, 52353 Düren (DE)
(74) Representative: Van Minnebruggen, Ewan Benito Agnes
(86) International application number: PCT/EP2020/067333
(87) International publication number: WO 2020/260192

(56) References cited:
- EP-A1- 3 399 191
- JP-A- H10 310 859
- US-A1- 2013 209 745
- US-A1- 2019 036 429
- US-B2- 7 175 887
- US-B2- 9 062 549

## Description

The present patent application relates to a method for manufacturing machine parts, such as, but not limited to compressor, expander or vacuum pump parts according to the preamble of claim 1 (see for example EP 3 399 191 A1).

The surface of a machine part can be provided with a coating to influence the behavior of the machine part. For oil free screw compressors, as an example, a coating is applied onto the surface of the rotor and housing to improve the operation of the oil free screw compressor. The coating serves multiple purposes. One purpose is to reduce the wear of the machine part. Another purpose is to facilitate transmission of heat through the machine part. Yet another purpose is to minimize the generation of heat during operation. Yet another purpose is to minimize leaking of air from the air chambers formed between the machine parts.

When a machine part is to be coated, it is aimed to achieve a proper adhesion between the coating layer and the machine part. Particularly when the machine part ages, a suboptimal adhesion of the coating layer may lead to a delamination of the coating layer. This decreases the operation performance of the machine part and could potentially damage the machine. To obtain a proper adhesion, the surface of the machine part is pre-treated before applying the coating. This pre-treating comprises one or multiple cleaning steps, typically mechanical and/or chemical cleaning. During cleaning, dirt and grease is removed from the machine part. The pre-treating typically further comprises a roughening operation to improve the adherence of the coating. A roughening operation can be performed, e.g. by means of sand blasting. US 2019/036429 A1 discloses methods of manufacturing electrically conductive copper components for electric devices and method of joining electrically conductive copper components are provided. Each of the electrically conductive copper components are manufactured to include a preexisting coating of joining material located on or adjacent to a joining surface thereof. JP H10-310859 A discloses a method for treating a surface of a material comprising at least a surface layer formed of a hard inorganic material, wherein the surface of the hard inorganic material of the surface layer is subjected to a roughening treatment using a laser beam.

A drawback of known techniques to treat a surface of a machine part is the significant impact on the environment. In particular the pre-treating steps such as cleaning and roughening produce harmful waste streams. Furthermore, at least part of these operations is complex to automate such that an operator performing the operations takes a risk of coming into physical contact with these harmful waste streams.

It is an object of the present invention to improve the treatment of machine parts.

To this end the invention proposes a method for treating a surface of a machine part according to claim 1.

Further preferred embodiments of the invention are defined in the dependent claims.

The invention further relates to an oil free screw compressor comprising a rotor and a housing, at least one of which is at least partly treated according to the invention.

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates some parameters of applying a pattern onto a surface with a laser;
figure 2 shows a laser treated surface;
figure 3 shows another laser treated surface;
figure 4 shows a system for performing the method of the invention;
figure 5A - 5D show multiple patterns; and
figure 6A and 6B show a cross-section and a top view respectively of a further system for performing the method of the invention.

The method according to the invention is particularly useful for manufacturing coated machine parts, such as for example screw rotors or compressor housings for oil free screw compressors, for scroll or tooth compressor manufacturing. Similarly, the method can be applied for manufacturing rotors, housings or shafts of expanders (e.g. screw expanders), vacuum pumps (e.g. vacuum claw) or low pressure applications (for example screw blowers).

According to a particular way of carrying out the invention, the step of applying the coating onto the patterned surface, includes applying any coating composition as described in European patent applications Nos. 14155385.9 and 17169341.9. Obviously, the invention is not limited to these specific coating compositions, but also other types of coatings could be applied.

Further, the polytetrafluoroethylene bonded solid lubricant as disclosed in Chinese patent application CN 105132086 could be used as coating material and may be applied according to any of the methods as described in this Chinese patent application.

More specifically, the coating material used in a method according to the invention could be polytetrafluoroethylene bonded solid lubricant prepared with polyamide-imide resin and epoxy resin as binders, polytetrafluoroethylene, melamine cyanurate and molybdenum disulfide as solid lubricants and a mixed solvent as a diluent and may further contain various fillers and a modification additive. The lubricant can be coated on the surfaces of the machine part and may be subjected to heating and solidification to form polytetrafluoroethylene bonded solid lubrication coating layers.

The coating material applied in a method according to the invention may contain a thermoplastic material such as for example, but not necessarily polyaryletherketone (PAEK), polyetheretherketone (PEEK). Additives may be included into the coating material such as for example Aluminium oxide (A1203), Silicon dioxide (Si02), glass (e.g. Borosilicate glass). Graphite may be included into the coating material, either or not in combination with any of the above-mentioned compounds.

Any of the following particles may be included in the coating material, either alone or in combination with any other compound or additive:
- hexagonal boron nitride
- carbon nanotubes (CNT)
- talc
- polytetrafluoroethylene (PTFE)
- perfluoroalkoxy-polymer (e.g. pertluoroalkoxy alkane or PFA)
- fluoroethylene propene (FEP)
- any other fluor polymer
- silicon carbide (SIC).

Alternatively, the composition of said coating material may be as follows :
- Polytetrafluoroethylene (954G 303 C Teflon, DuPont) 750-850
- Amorphous graphite powder 300-400
- Thinner for spray cleaning apparatuses (8595 thinner, DuPont) 200-270
- Methyl ethyl ketone (MEK) 170-220
- Cellosolve acetate coating additive (Syn Fac 800 resin) 200-300

A particular formulation of the new coating may be as follows :
- Polytetrafluoroethylene (954G 303 C Teflon, DuPont) 800
- Amorphous graphite powder 360
- Thinner for spray cleaning apparatuses (8595 thinner, DuPont) 240
- Methyl ethyl ketone (MEK) 195
- Cellosolve acetate coating additive (Syn Fac 800 resin) 240

Tests have shown that the step of applying a pattern onto a surface of the machine part can entirely or partly eliminate the need of roughening said surface, e.g. by means of sandblasting, while a good adhesion of the coating material onto the machine part surface can be assured. Said machine part is typically a metal part, for example cast iron.

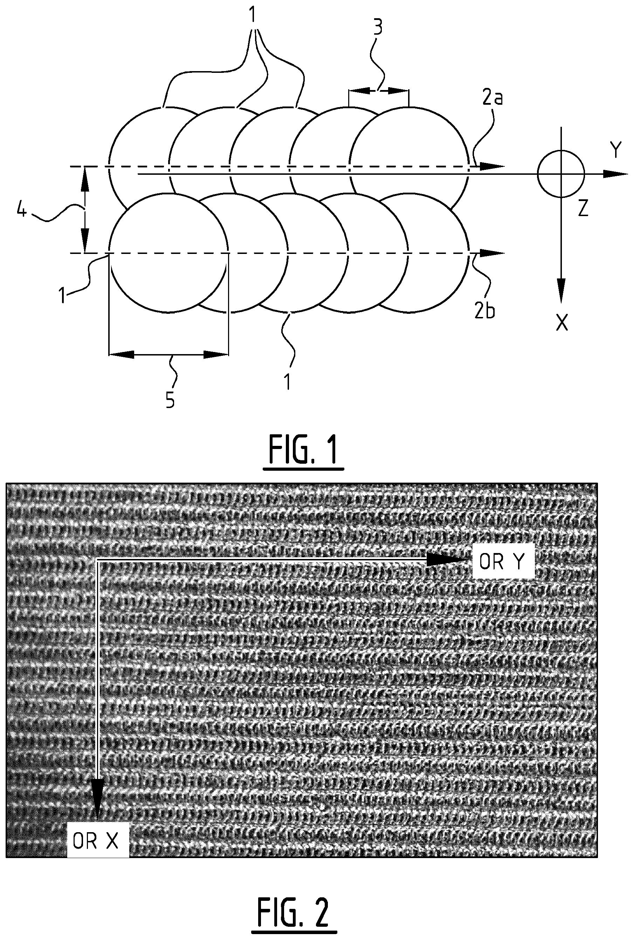

Figure 1 illustrates schematically the effect of applying a pattern 2 onto a surface by means of a laser. The laser is a pulse-generating laser. The pulse-generating laser outputs a laser beam at a predetermined frequency. As a result, the optical power arrives at the impact zone in pulses with a predetermined duration and frequency, typically with a predetermined repetition rate. Such laser may be embodied by a wide range of technologies.

The laser applied in the present invention is preferably a pulsed laser because the application benefits from the production of pulses with a predetermined, large, amount of energy. Since the pulse energy is equal to the average power divided by the repetition rate, the predetermined amount may be reached by lowering the frequency of pulses so that more energy can be built up in between pulses. In laser ablation for example, a small volume of material at the surface of a work piece can be evaporated if it is heated in a very short time, whereas supplying the energy gradually would allow for the heat to be absorbed into the bulk of the piece, never attaining a sufficiently high temperature at a particular point.

With reference to figure 1, each circle segment illustrates the impact of a laser pulse on the surface to be treated. A circle segment is illustrated with reference number 1. Figure 1 shows a three dimensional coordinate system with X-Y-Z directions. In the example of figure 1, the laser beam extends in the Z-direction while the surface extends in the X and Y direction. To maximize the energy transmitted from the laser to the surface, the laser beam is preferably oriented substantially perpendicular to the surface.

While the laser beam is pointed towards the surface and operates at a predetermined operating frequency, the beam moves over the surface along a path 2. The paths 2a and 2b forms a pattern 2 which covers the surface to be treated. The pattern 2 comprises multiple path segments. Figure 1 illustrates segments 2a and 2b which are located at a path segment distance 4 from each other.

The laser is configured with a laser beam diameter. Optical elements of the laser, in combination with the distance between the laser source and the surface, determine the diameter of the impact zone of the laser beam on the surface. The impact diameter is illustrated in figure 1 with reference number 5. The laser preferably has a power output which is higher than 50W, preferably higher than 70W, more preferably higher than 90W. Such power output, with a well chosen laser beam diameter, preferably results in an energy transmission to the surface which is, according to the present invention, higher than 8J/cm², preferably higher than 12J/cm², more preferably higher than 18J/cm², most preferably higher than 23J/cm².

The pulse frequency and the speed with which the laser beam moves over the surface determines a distance between adjacent laser beam impact zones in a path segment on the surface. This distance is illustrated in figure 1 with reference number 3, and is measured as a center to center distance. Preferably, distance 3 is smaller than diameter 5. The path segment distance is also preferably smaller than diameter 5.

Tests and simulations have shown that a laser pulse impact on a metal surface typically removes, by burning or evaporating, the impurities such as grease, dirt, old coatings which are present on the surface. Furthermore, the laser pulse impact creates a miniature crater in the surface of the metal. The crater depth and shape depends on the type of metal, and can be experimentally determined by the skilled person.

Laser pulse frequency and laser speed determine distance 3 between adjacent impact zones 1 in a single path segment 2a, 2b. Path segment distance 4 determines the distance between laser impact zones 1 in adjacent paths 2a, 2b. The pulse intensity determines the depth of the miniature crater in the surface, which form the impact zones 1. The pulse diameter determines the diameter and also influences the depth of the crater in the surface which forms the impact zones 1. At least the above-mentioned parameters may be balanced to obtain a predetermined roughness on the surface.

The parameters are balanced to obtain a surface roughness of the surface higher than 1,0 Ra, preferably higher than 1,3 Ra and preferably also a surface roughness of the surface higher than 10,0 Ry, preferably higher than 15,0 Ry. Ra is defined as arithmetical mean value, measured in µm of the absolute values of the profile departures from the mean line within a sampling length. The sampling length may be predefined between 0,2 and 3.0 mm. The mean line is a reference line having the form of the geometrical profile and position so that within the sampling length, the sum of the squares of the profile departures from this line is at a minimum. Ry is defined as the distance measured in µm between the highest profile peak and the lowest profile valley in the profile diagram, measured vertically, within the sampling length.

The measurement of the arithmetic mean roughness Ra and Ry of the surface is preferably made in accordance with ISO 4287:1997. A skilled person may determine the parameters, based on the teaching provided above, to arrive at the preferred roughness of the surface. It will be clear that different surface materials will require different parameters.

Preferably, the pattern is chosen to arrive at a surface roughness of maximum 3 Ra, preferably maximum 2,7 Ra. Instead of increasing the roughness by applying a pattern, the roughness may also be decreased. In particular, by increasing the overlap of adjacent laser beam spots, for example by decreasing the path segment distance 4 and/or by lowering the speed to decrease the distance between adjacent laser beam impact zones in a path segment, the roughness is decreased.

Figure 2 shows an example of a surface which is treated by applying a pattern with a laser. In figure 2, multiple adjacent path segments are shown, in analogy with figure 1. The result is that the surface shows a pattern composed of multiple adjacent craters formed on the surface. The presence of these craters means that any impurity that was present on the surface before applying the pattern by means of the laser is removed. These craters, particularly due to their relative position with respect to each other, give the surface a roughness. This roughness ensures that the coating adheres well, as is explained above.

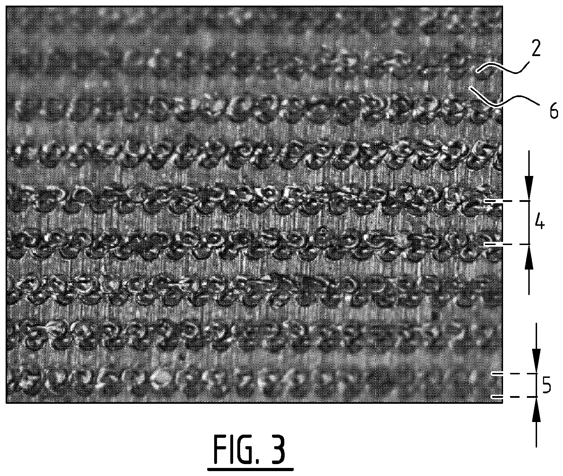

Figure 3 shows another example of a surface which is treated by applying a pattern with a laser. In figure 3, the adjacent path distance 4 is larger than the diameter 5. The result is that in between the paths 2, strips of non-treated surface area 6 can be observed. For some surfaces to be treated, this might be sufficient to obtain the predetermined roughness. This could be sufficient to obtain a good adhesion of a coating despite the presence of apparently non-treated surface areas 6. Because these apparently non-treated surface areas 6 are enclosed by treated surface areas, impurities such as grease are removed and the non-treated surface area 6 is sufficiently cleaned. Separate cleaning steps could be required to remove impurities from the surface at least before applying the coating. Such separate cleaning steps may be at least largely superfluous when the laser beam impacts the complete surface by applying the pattern.

The laser beam impacts at least substantially the complete surface when the laser beam speed along the path 2 is chosen such that adjacent laser beam impact zones show a center to center distance 3 which is smaller than the laser impact diameter 5 and when the distance between adjacent paths 2a and 2b is smaller than the laser impact diameter 5.

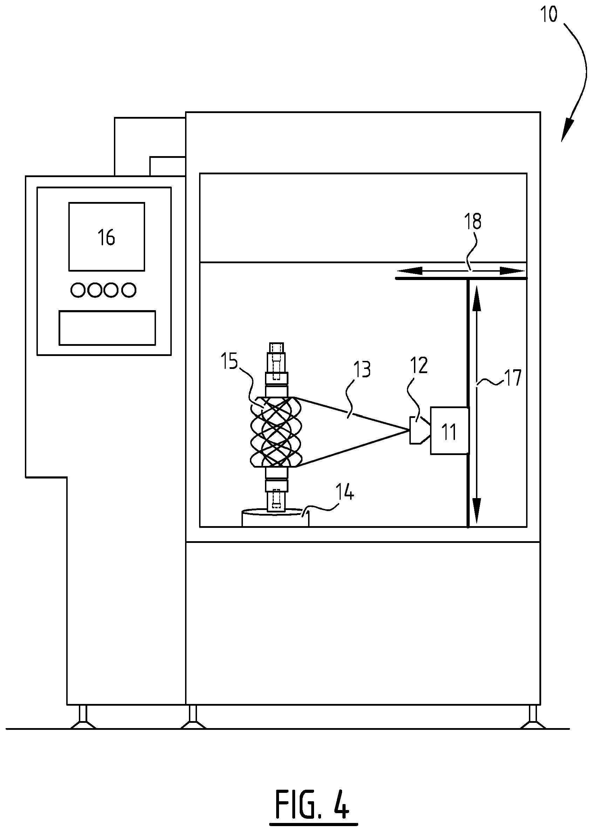

Figure 4 illustrates an apparatus 10 (not covered by the present invention), wherein at least part of the method of the invention can be executed. The apparatus 10 comprises a laser source 11 and optical elements 12 to output a laser beam 13. The apparatus 10 furthermore comprises a support 14 for a machine part being a rotor 15 of a compressor, preferably a rotor 15 of an oil free screw compressor. The apparatus preferably comprises a user interface 16 to enable a user to control the operating settings of the apparatus 10. The user interface 16 is shown as an integral part of the apparatus 10. It will be clear that the apparatus 10 could alternatively comprise a communication module such that an external user interface 16 could be operationally connected to the apparatus 10.

The invention is particularly developed for treating surfaces of rotors 15 and housing parts of oil free compressors. The coatings of such machine parts are applied with high mechanical precision and the machine parts with the coatings are used in extreme conditions. Therefore pre-treatment of the surface, ensuring that the application of the coating is optimal, is preferred.

When applying a pattern onto a surface with a complex three-dimensional shape such as the surface of a rotor 15, the apparatus 10 comprises preferably at least three degrees of freedom, more preferably four degrees of freedom, most preferably five degrees of freedom. In the shown example, the rotor 15 is rotatable about an upright axis. Furthermore, at least the optical elements 12 of the laser, preferably also the laser source, may be moved up and down, illustrated with arrow 17, and may be moved towards and away from the machine part 15, illustrated with arrow 18.

Preferably the optical elements 12 of the laser, and more preferably also the laser source 11, may be rotated about a horizontal axis such that the laser beam 13 can be oriented partly downward and partly upward towards the rotor 15. This allows the laser beam 13 to impact the surface substantially perpendicular even when different surface segments show different orientations with respect to the rotor axis. Alternatively, the rotor 15 may be rotated about a lying axis to change the impact angle of the laser beam 13 relative to the upward axis of the rotor 15. By operating the different movements of the apparatus 10, the laser beam 13 can be pointed towards the rotor surface, at least for the majority of the surface, substantially perpendicular.

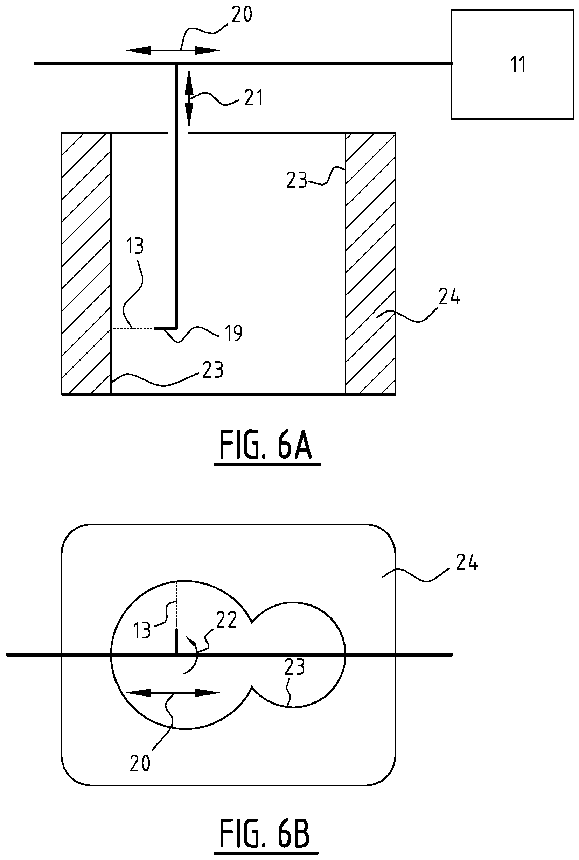

The same technique may be applied for treating parts of the compressor housing, as will be explained hereunder with reference to figure 6. An alternative setup may also be used wherein a laser source is mounted at a distance from the laser beam output, and wherein optical elements control the location of the laser beam output and the direction in which the laser beam extends.

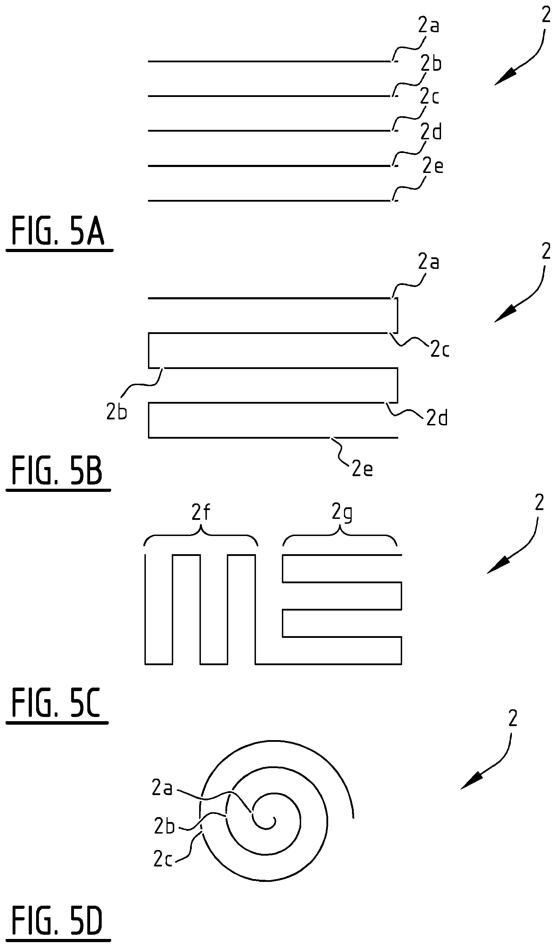

Figure 5 illustrates multiple patterns for treating a surface. Figure 5A shows a pattern comprising multiple separate parallel path segments 2a, 2b, ... 2e adjacent to each other. As explained above, the distance between adjacent path segments 2 may be chosen to obtain the preferred surface treatment.

Figure 5B shows a pattern comprising a single path which meanders over the surface area. Such single path may be seen as multiple interconnected parallel path segments 2a, 2b, ... 2e, which path segments are located adjacent to each other. As explained above, the distance between adjacent path segments 2 may be chosen to obtain the preferred surface treatment. The pattern of figure 5B is preferred because of a time-efficient use of the laser. The path is continuous such that the laser may be operated with a minimum of intermissions.

Figure 5C shows a pattern comprising a single path which meanders over the surface area but wherein multiple path segments are not parallel. The figure shows two zones 2f and 2g, and the orientation of the path segments in zone 2f differs from the orientation of the path segments in zone 2g. However, the pattern is chosen in such a manner that adjacent path segments show a predetermined maximum distance with respect to each other, to obtain the preferred surface treatment.

Figure 5D shows yet another pattern comprising a spiral shaped path. Alternative to a spiral, concentric circles can be formed. In the shown spiral shaped path, spiral segments, which may be freely defined for example as shown in the figure, are positioned at a predetermined distance with respect to each other, to obtain the preferred surface treatment.

The setup of figure 4 is provided for applying a pattern to a machine part with a predominantly outward facing surface. An outward facing surface is a surface of which the surface normal is directed away from the center of the machine part. Typically, the surface normal of an outward facing surface does not cross another part of the machine part. In other words, a predominantly outward facing surface has a majority of convex surface segments.

The setup of figure 6 is provided for applying a pattern to a machine part with a predominantly inward facing surface. An inward facing surface is a surface of which the surface normal is directed at least partially towards the center of the machine part. Typically, the surface normal of an inward facing surface may cross or at least come close to another part of the machine part. In other words, a predominantly inward facing surface has a majority of concave surface segments.

Figure 6 illustrates a setup for applying a pattern to a housing of a compressor, for example an oil free screw compressor. Figure 6A illustrates a cross-section and figure 6B shows a top view. The setup comprises a laser source 11. A light guide setup typically comprising one or multiple mirrors is provided to guide the laser light to a laser beam output 19. The laser beam output 19 is adapted to move inside the housing. This is partly illustrated by the arrows 20 and 21 in figure 6A, and is partly illustrated by the rotational arrow 22 in figure 6B. The skilled person understands that a combined movement may result in the laser beam output 19 being directed towards the inward facing surface 23 to follow a predetermined path forming a pattern.

The invention is not limited to the embodiments described above by means of example, or to the method steps listed above by way of better illustrating the invention, however, a method according to the invention of manufacturing a machine part can be realized in many ways, without departure from the scope of the invention as defined in the appended claims.

## Claims

1. Method for treating a surface of a machine part (15, 24) selected from a group consisting of at least a part of a screw rotor (15) for an oil free screw compressor and at least a part of a housing element (24) for such oil free screw compressor, said method including the steps of:
- manufacturing the machine part (15, 24);
- applying a first coating layer onto the surface of said machine part;
the method being **characterised by** the following steps:
then
- applying a pattern (2) onto said surface of said machine part (15, 24) by means of a laser (11, 12, 13), the laser cleaning the surface of the machine part (15, 24) and simultaneously influencing a roughness of the surface, the power output of the laser resulting in an energy transmission to the surface higher than 8 J/cm²;
- applying a second coating onto the patterned surface.

2. Method according to claim 1, wherein the step of applying a pattern (2) comprises:
- determining at least one path (2a, 2b, ... 2g) onto the surface such that the at least one path extends over the surface;
- operating the laser (11, 12, 13) in such a manner that a laser beam (13) of the laser impacts the surface on the at least one path (2a, 2b, ... 2g).

3. Method according to claim 2, wherein the laser (11, 12, 13) is pointed towards the surface such that the laser beam (13) impacts the surface at an angle of about 90 degrees.

4. Method according to claim 2 or 3, wherein operating the laser (11, 12, 13) comprises displacing the laser (11, 12, 13) with respect to the surface such that an impact point of the laser beam (13) follows said at least one path (2a, 2b, ... 2g) at a predetermined speed.

5. Method according to any one of the claims 2 - 4, wherein the laser comprises a pulse-generating laser source (11) and wherein operating the laser (11, 12, 13) comprises outputting said laser beam (13) at a predetermined operating frequency and at a predetermined operating intensity.

6. Method according to claim 2 and 5, wherein the predetermined speed and the predetermined operating frequency are kept in a predetermined relation with respect to each other.

7. Method according to claim 6, wherein the predetermined relation is chosen such that subsequent laser beam spots (1) are located at a point-to-point distance (3) with respect to each other that is smaller than a laser surface impact diameter (5).

8. Method according to claim 7, wherein the at least one path (2a, 2b, ... 2g) comprises multiple adjacent path segments, wherein the adjacent path segments show a center-to-center distance (4) which is smaller than said laser surface impact diameter (5).

9. Method according to any one of the previous claims 1-8, wherein the applying a pattern (2) is parametrized to obtain a surface roughness of the surface higher than 1,0 Ra, preferably higher than 1,3 Ra and optionally a surface roughness of the surface higher than 10,0 Ry, preferably higher than 15,0 Ry.

10. Method according to any of the preceding claims 1-9, wherein the second coating is applied in multiple layers.

## Patentansprüche

1. Verfahren zum Behandeln einer Oberfläche eines Maschinenteils (15, 24), ausgewählt aus einer Gruppe bestehend aus mindestens einem Teil eines Schraubenrotors (15) für einen ölfreien Schraubenkompressor und mindestens einem Teil eines Gehäuseelements (24) für einen solchen ölfreien Schraubenkompressor, wobei das Verfahren die Schritte einschließt:
- Herstellen des Maschinenteils (15, 24);
- Aufbringen einer ersten Beschichtungsschicht auf die Oberfläche des Maschinenteils;
wobei das Verfahren **gekennzeichnet ist durch** die folgenden Schritte:
dann
- Aufbringen eines Musters (2) auf die Oberfläche des Maschinenteils (15, 24) mittels eines Lasers (11, 12, 13), wobei der Laser die Oberfläche des Maschinenteils (15, 24) reinigt und gleichzeitig eine Rauheit der Oberfläche beeinflusst, wobei die Leistungsabgabe des Lasers zu einer Energieübertragung auf die Oberfläche von mehr als 8 J/cm² führt;
- Aufbringen einer zweiten Beschichtung auf die gemusterte Oberfläche.

2. Verfahren nach Anspruch 1, wobei der Schritt des Aufbringens eines Musters (2) umfasst:
- derartiges Bestimmen von mindestens einem Pfad (2a, 2b, ... 2g) auf die Oberfläche, dass sich der mindestens eine Pfad über die Oberfläche erstreckt;
- Betreiben des Lasers (11, 12, 13) auf derartige Weise, dass ein Laserstrahl (13) des Lasers auf dem mindestens einen Pfad (2a, 2b, ... 2g) auf die Oberfläche trifft.

3. Verfahren nach Anspruch 2, wobei der Laser (11, 12, 13) derart auf die Oberfläche gerichtet wird, dass der Laserstrahl (13) in einem Winkel von etwa 90 Grad auf die Oberfläche trifft.

4. Verfahren nach Anspruch 2 oder 3, wobei ein Betreiben des Lasers (11, 12, 13) ein derartiges Verschieben des Lasers (11, 12, 13) in Bezug auf die Oberfläche umfasst, dass ein Auftreffpunkt des Laserstrahls (13) dem mindestens einen Pfad (2a, 2b, ... 2g) mit einer zuvor bestimmten Geschwindigkeit folgt.

5. Verfahren nach einem der Ansprüche 2 bis 4, wobei der Laser eine impulserzeugende Laserquelle (11) umfasst und wobei das Betreiben des Lasers (11, 12, 13) ein Ausgeben des Laserstrahls (13) mit einer zuvor bestimmten Betriebsfrequenz und einer zuvor bestimmten Betriebsintensität umfasst.

6. Verfahren nach Anspruch 2 und 5, wobei die zuvor bestimmte Geschwindigkeit und die zuvor bestimmte Betriebsfrequenz in einer zuvor bestimmten Relation in Bezug zueinander gehalten werden.

7. Verfahren nach Anspruch 6, wobei die zuvor bestimmte Relation derart gewählt wird, dass sich aufeinanderfolgende Laserstrahlflecke (1) in einem Punktzu-Punkt-Abstand (3) in Bezug zueinander befinden, der kleiner als ein Laseroberflächenauftreffdurchmesser (5) ist.

8. Verfahren nach Anspruch 7, wobei der mindestens eine Pfad (2a, 2b, ... 2g) mehrere angrenzende Pfadsegmente umfasst, wobei die angrenzenden Pfadsegmente einen Mitte-zu-Mitte-Abstand (4) aufweisen, der kleiner als der Laseroberflächenauftreffdurchmesser (5) ist.

9. Verfahren nach einem der vorstehenden Ansprüche 1 bis 8, wobei das Aufbringen eines Musters (2) parametrisiert wird, dass eine Oberflächenrauheit der Oberfläche höher als 1,0 Ra, vorzugsweise höher als 1,3 Ra und optional eine Oberflächenrauheit der Oberfläche höher als 10,0 Ry, vorzugsweise höher als 15,0 Ry erreicht wird.

10. Verfahren nach einem der vorstehenden Ansprüche 1 bis 9, wobei die zweite Beschichtung in mehreren Schichten aufgebracht wird.

## Revendications

1. Procédé de traitement d'une surface d'une pièce de machine (15, 24) choisie dans un groupe constitué d'au moins une pièce d'un rotor à vis (15) pour un compresseur à vis sans huile et d'au moins une pièce d'un élément de carter (24) pour un tel compresseur à vis sans huile, ledit procédé comportant les étapes consistant à :
- fabriquer la pièce de machine (15, 24) ;
- appliquer une première couche de revêtement sur la surface de ladite pièce de machine ;
le procédé étant **caractérisé par** les étapes suivantes consistant à :
ensuite
- appliquer un motif (2) sur ladite surface de ladite pièce de machine (15, 24) au moyen d'un laser (11, 12, 13), le laser nettoyant la surface de la pièce de machine (15, 24) et influençant simultanément une rugosité de la surface, la puissance de sortie du laser entraînant une transmission d'énergie à la surface supérieure à 8 J/cm²;
- appliquer un second revêtement sur la surface à motifs.

2. Procédé selon la revendication 1, dans lequel l'étape consistant à appliquer un motif (2) comprend :
- le fait de déterminer au moins une trajectoire (2a, 2b, ... 2g) sur la surface de telle sorte que l'au moins une trajectoire s'étend sur la surface ;
- le fait de faire fonctionner le laser (11, 12, 13) d'une manière telle qu'un faisceau laser (13) du laser frappe la surface sur l'au moins une trajectoire (2a, 2b, ... 2g).

3. Procédé selon la revendication 2, dans lequel le laser (11, 12, 13) est dirigé vers la surface de telle sorte que le faisceau laser (13) frappe la surface à un angle d'environ 90 degrés.

4. Procédé selon la revendication 2 ou 3, dans lequel le fait de faire fonctionner le laser (11, 12, 13) comprend le déplacement du laser (11, 12, 13) par rapport à la surface de telle sorte qu'un point d'impact du faisceau laser (13) suit ladite au moins une trajectoire (2a, 2b, ... 2g) à une vitesse prédéterminée.

5. Procédé selon l'une quelconque des revendications 2 à 4, dans lequel le laser comprend une source laser génératrice d'impulsions (11) et dans lequel le fait de faire fonctionner le laser (11, 12, 13) comprend l'émission dudit faisceau laser (13) à une fréquence de fonctionnement prédéterminée et à une intensité de fonctionnement prédéterminée.

6. Procédé selon les revendications 2 et 5, dans lequel la vitesse prédéterminée et la fréquence de fonctionnement prédéterminée sont maintenues dans une relation prédéterminée l'une par rapport à l'autre.

7. Procédé selon la revendication 6, dans lequel la relation prédéterminée est choisie de telle sorte que des points successifs (1) du faisceau laser sont situés à une distance point à point (3) les uns par rapport aux autres qui est inférieure à un diamètre d'impact de surface de laser (5).

8. Procédé selon la revendication 7, dans lequel l'au moins une trajectoire (2a, 2b, ... 2g) comprend de multiples segments de trajectoire adjacents, dans lequel les segments de trajectoire adjacents présentent une distance centre à centre (4) qui est inférieure audit diamètre d'impact de surface de laser (5).

9. Procédé selon l'une quelconque des revendications 1 à 8 précédentes, dans lequel l'application d'un motif (2) est paramétrée pour obtenir une rugosité de surface de la surface supérieure à 1,0 Ra, de préférence supérieure à 1,3 Ra et facultativement une rugosité de la surface de la surface supérieure à 10,0 Ry, de préférence supérieure à 15,0 Ry.

10. Procédé selon l'une quelconque des revendications 1 à 9 précédentes, dans lequel le second revêtement est appliqué en couches multiples.
